# FASCICULE DE BREVET EUROPEEN

(11) **EP 1 395 389 B1**
(45) Date de publication et mention de la délivrance du brevet: **17.05.2006**
(21) Numéro de dépôt: 02745527.8
(22) Date de dépôt: 14.06.2002
(51) Int. Cl.: B23Q 1/00

(54) **MACHINE MULTIPOSTE A TRANSFERT ROTATIF POUR USINAGE DE PIECES**
RUNDTAKTWERKZEUGMASCHINE ZUR BEARBEITUNG VON WERKSTÜCKEN
MULTI-STATION MACHINE WITH ROTATING TRANSFER FOR MACHINING PIECES

(30) Priorité: 15.06.2001 FR 0108067
(43) Date de publication de la demande: 10.03.2004
(73) Titulaire: Machines-Outils Wirth & Gruffat, 74370 Argonay (FR)
(72) Inventeur: ZUCCALLI, Laurent, F-74270 Frangy (FR)
(74) Mandataire: Poncet, Jean-François
(86) Numéro de dépôt international: PCT/FR2002/002037
(87) Numéro de publication internationale: WO 2002/102542

(56) Documents cités:
- EP-A- 0 371 936
- EP-A- 0 785 040
- EP-A- 0 937 539
- DE-A- 19 502 341
- DE-A- 19 504 368
- DE-U- 8 714 508
- FR-A- 1 376 657
- GB-A- 1 494 173
- US-A- 4 520 595
- US-A- 4 523 360
- US-A- 5 452 502
- US-A- 5 505 653
- US-A- 5 815 902
- US-A- 5 832 590
- VOLL H: "SPINDELEINHEITEN IM WERKZEUGMASCHINENBAU" WERKSTATT UND BETRIEB, CARL HANSER VERLAG. MUNCHEN, DE, vol. 129, no. 1/2, 1 février 1996 (1996-02-01), pages 46-50, XP000584028 ISSN: 0043-2792
- PATENT ABSTRACTS OF JAPAN vol. 006, no. 201 (M-163), 13 octobre 1982 (1982-10-13) & JP 57 107759 A (HONDA MOTOR CO LTD), 5 juillet 1982 (1982-07-05)

## Description

La présente invention concerne les machines-outils permettant l'usinage rapide de pièces en grande série.

Les opérations de tournage de pièces en grande série sont généralement réalisées sur des tours multibroche. Dans un tour multibroche, plusieurs pièces sont tenues simultanément chacune sur l'une des broches d'une série de broches entraînées par un même moteur et disposées parallèlement les unes aux autres, généralement selon une disposition en couronne. L'avantage est un usinage très rapide par tournage, avec une bonne précision d'usinage. L'inconvénient est qu'un tour multibroche n'effectue que des opérations de tournage.

Par conséquent, lorsqu'une pièce doit subir plusieurs types d'usinage successifs, le tournage peut être effectué sur le tour multibroche, et les autres opérations doivent être effectuées en reprise, c'est-à-dire après déplacement de la pièce et fixation sur un support d'une autre machine d'usinage adaptée aux autres opérations. Il en résulte une complexité de manipulation, et une perte de précision de position entre les différentes surfaces réalisées par les usinages successifs.

On connaît également des centres d'usinage, dans lesquels la pièce est tenue dans un poste d'usinage unique, et est soumise à l'action successive de plusieurs outils. Il n'est alors pas nécessaire de déposer la pièce pour la remonter sur un autre support pour les usinages successifs, de sorte que l'on gagne en précision. L'inconvénient est une perte importante de rapidité, car tous les outils travaillent sur une seule pièce disposée dans un poste d'usinage unique.

On connaît également des machines à transfert rotatif, dans lesquelles les pièces sont disposées sur une tourelle rotative qui les amène successivement à plusieurs postes d'usinage ayant chacun leurs outils propres. Ces machines à transfert rotatif sont utilisées à ce jour pour les usinages en reprise après le tournage par un tour multibroche.

On a pu être tenté d'adapter, sur un tour multibroche, d'autres outils pour effectuer des opérations d'usinage complémentaires. Mais le tour multibroche ne se prête pas bien à la disposition d'outils supplémentaires, notamment à cause d'un manque de place pour loger les outils ; les broches sont en effet relativement proches les unes des autres.

On connaît également du document DE 87 14 508 U une machine multiposte comprenant :
- une tourelle rotative indexable équipée de plusieurs dispositifs de tenue de pièces répartis en périphérie de la tourelle,
- une pluralité de dispositifs de tenue et de positionnement d'outils, répartis en une pluralité de postes d'usinage autour de la tourelle, déplaçables sur des glissières horizontales inférieures, et adaptés pour usiner les pièces portées par les dispositifs de tenue de pièces,
- les dispositifs de tenue de pièces comprenant des broches de tournage, placées en position fixe sur la tourelle, dont l'axe est orienté vers la périphérie de la tourelle et qui sont sollicitées par un moteur déporté verticalement pour entraîner en rotation rapide la pièce pour une opération de tournage par des outils de tournage prévus dans l'un au moins des postes d'usinage,
- les broches de tournage étant capables de s'indexer en toutes positions angulaires pour permettre d'autres usinages de la pièce par d'autres outils adaptés prévus dans l'un au moins des postes d'usinage.

Ce document ne décrit ni l'intérêt ni les moyens pour maximiser le nombre et la puissance des dispositifs de tenue de pièces sur la tourelle. De plus, tous les postes de travail comprennent des porte-outils frontaux qui s'opposent à l'accès radial à la zone d'usinage et interdisent le chargement de barres.

### EXPOSE DE L'INVENTION

Le problème proposé par la présente invention est de concevoir une nouvelle structure de machine-outil permettant de réaliser des usinages rapides et multiples, tous les usinages d'une pièce pouvant être réalisés sur une même machine sans déposer la pièce de son support ; la structure doit être adaptée pour recevoir des outils en nombre suffisant et de taille suffisante, sans problème de place pour leur logement, et en assurant l'évacuation efficace des déchets d'usinage. Et la structure doit être adaptée pour comporter des dispositifs de tenue de pièces en nombre suffisant et de puissance suffisante pour les usinages envisagés, tout en minimisant l'encombrement de la machine-outil.

Une autre difficulté est d'assurer un usinage précis des pièces, notamment grâce à la précision des dispositifs de tenue de pièces.

Pour atteindre ces buts ainsi que d'autres, l'invention propose une machine multiposte d'usinage de pièces à transfert rotatif selon la revendication 1.

Selon un mode de réalisation avantageux, certains au moins des postes d'usinage comprennent une paroi support verticale orientée parallèlement à l'axe d'une électrobroche de tournage et portant un plateau porte-unité d'usinage par l'intermédiaire d'une coulisse axiale et d'une coulisse verticale constituant une structure de chariots croisés.

De préférence, on prévoit dans au moins certains des postes d'usinage deux structures de chariots croisés, une première structure avec un premier plateau pour couvrir l'espace inférieur et frontal d'usinage, une seconde structure avec un second plateau pour couvrir l'espace supérieur d'usinage.

Selon un mode de réalisation particulièrement avantageux, la machine comprend des passages d'évacuation inférieurs entre les parois supports verticales successives. Cette disposition facilite considérablement l'évacuation des déchets d'usinage, et est rendue possible par le fait que les chariots sont tenus sur des parois verticales qui ne perturbent pas l'évacuation des déchets.

De préférence, les électrobroches de tournage ont une forme générale rétrécie vers l'intérieur de la tourelle, les électrobroches étant ainsi susceptibles de se loger les unes à côté des autres dans la tourelle sans nécessiter d'augmenter le diamètre de la tourelle.

L'un des problèmes d'une telle structure à broches portées par une tourelle centrale est l'amenée des énergies électrique, pneumatique, hydraulique dans la tourelle. Ce problème est résolu selon l'invention en prévoyant que l'alimentation des électrobroches de tournage en énergie électrique est assurée par un faisceau de câbles et de tuyaux enroulé autour de l'axe de rotation de la tourelle entre une zone de branchement fixe sur le bâti et une zone de branchement rotative sur la tourelle de la machine. Les moyens de commande de rotation de tourelle assurent une rotation alternative de la tourelle, avec une séquence d'usinage à rotations partielles depuis une position d'origine dans un premier sens pour les transferts successifs des pièces de poste en poste entre les étapes d'usinage successives, et avec une séquence de retour à rotation inverse rapide jusqu'en position d'origine de la tourelle. On peut avantageusement prévoir onze rotations partielles de séquence d'usinage, et une rotation de retour de 330°.

De préférence, la zone de branchement fixe est située au-dessus de la tourelle.

Selon un premier mode de réalisation, le faisceau de câbles et de tuyaux est enroulé en hélice autour de l'axe de rotation de la tourelle. En position d'enroulement maximum le faisceau hélicoïdal de câbles et de tuyaux peut avantageusement former une hélice faisant au moins quatre spires pour chaque câble ou tuyau.

Selon un mode de réalisation préféré, le faisceau de câbles et de tuyau est conformé en un S qui se replie et se déploie pendant la rotation.

On peut trouver avantage à commander la rotation de la tourelle par un double indexage, c'est-à-dire en faisant une rotation de deux pas faisant tourner la tourelle pour déplacer une pièce depuis un poste jusqu'au poste qui suit le poste adjacent. Il est alors possible d'alterner les types d'usinage, et de prévoir par exemple six opérations de tournage à broche rotative et six opérations d'usinage à broche fixe.

Un autre problème que se propose de résoudre l'invention est d'usiner toutes les faces d'une pièce. On prévoit pour cela des moyens permettant d'usiner une première partie de surface de pièce dans certains postes, puis de retourner la pièce de 180° pour l'usiner sur les autres portions de surface. On comprendra que ces moyens qui permettent un usinage complet en deux séquences et un retournement constituent en eux-mêmes une invention indépendante susceptible d'applications indépendamment de la présence des autres caractéristiques décrites, et notamment indépendamment des caractéristiques de la revendication 1.

### DESCRIPTION SOMMAIRE DES DESSINS

D'autres objets, caractéristiques et avantages de la présente invention ressortiront de la description suivante de modes de réalisation particuliers, faite en relation avec les figures jointes, parmi lesquelles:
- la figure 1 est une vue générale en perspective d'une machine multiposte d'usinage selon un mode de réalisation de la présente invention ;
- la figure 2 est une vue de dessus de la machine de la figure 1 ;
- la figure 3 est une vue partielle de dessus en coupe de la machine de la figure 1, montrant les structures de broche et les mécanismes de tenue de pièce ;
- la figure 3A est une vue partielle de dessus en coupe de la machine selon un mode de réalisation particulier à poste de chargement et de retournement ;
- la figure 4 est une vue de détail en perspective montrant la structure d'un porte-outil sur la machine de la figure 1 ;
- la figure 5 est une vue partielle en perspective illustrant le mécanisme d'entraînement en rotation de la tourelle ;
- la figure 6 est une vue partielle en perspective illustrant un premier mode de réalisation du principe d'alimentation en énergie des broches de tournage de la tourelle ;
- la figure 7 est une vue schématique de dessus d'un mode de réalisation préféré des moyens d'alimentation en énergie des broches de tournage de la tourelle ; et
- la figure 8 est une vue de dessus en coupe longitudinale d'une structure possible de broche de tournage selon la présente invention.

### DESCRIPTION DES MODES DE REALISATION PREFERES

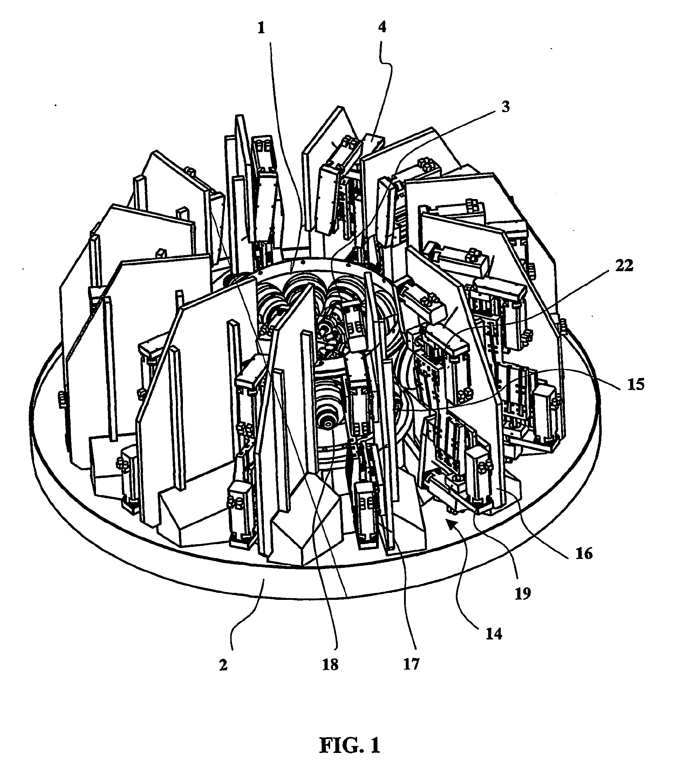

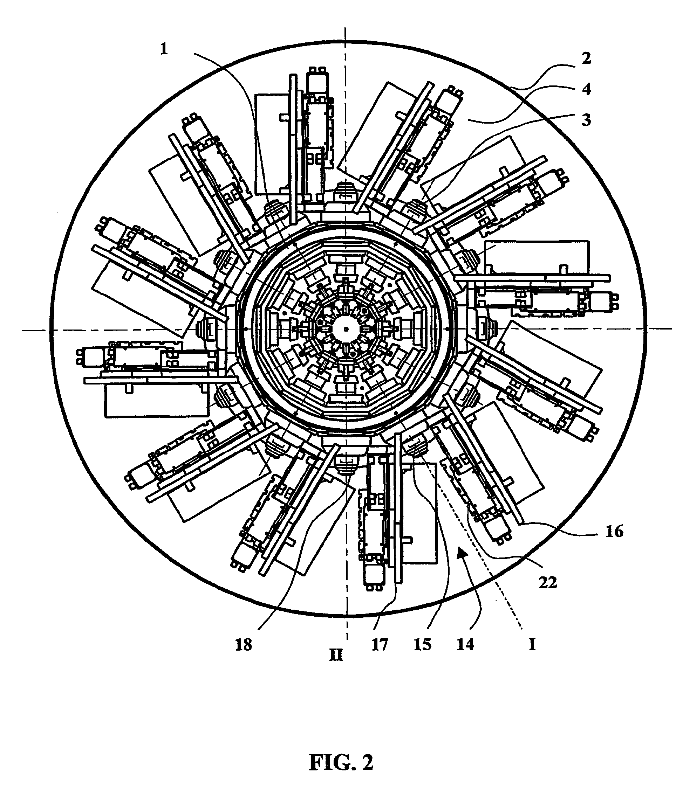

Dans la réalisation illustrée sur les figures, comme on le voit en particulier sur les figures 1 et 2, une machine multiposte d'usinage de pièces à transfert rotatif selon l'invention comprend de façon générale une tourelle 1 rotative indexable, montée à rotation autour d'un axe vertical sur un bâti 2. Le bâti 2 comprend une pluralité de dispositifs de tenue et de positionnement d'outils, répartis en une pluralité de postes d'usinage autour de la tourelle 1, et adaptés pour usiner des pièces portées par des dispositifs de tenue de pièces prévus sur la tourelle 1.

Selon l'invention, les dispositifs de tenue de pièces sur la tourelle 1 sont des électrobroches de tournage, par exemple l'électrobroche 3. Dans le mode de réalisation des figures 1 et 2, on distingue ainsi douze électrobroches de tournage telles que l'électrobroche 3, réparties équitablement en périphérie de la tourelle 1, et ayant un axe orienté radialement vers la périphérie de la tourelle 1. Les électrobroches de tournage 3 selon l'invention sont capables d'entraîner en rotation rapide une pièce tenue sur la broche pour une opération de tournage par des outils de tournage prévus sur un poste d'usinage correspondant.

On distingue sur les figures 1 et 2 douze postes d'usinage tels que le poste 4 qui, dans la position de la tourelle 1, correspond à l'électrobroche de tournage 3.

Les électrobroches de tournage telles que l'électrobroche 3 sont capables de s'indexer en toutes positions angulaires, en conservant alors un couple de blocage de la pièce qui soit suffisant pour permettre l'usinage de la pièce par des outils adaptés du poste d'usinage correspondant tel que le poste d'usinage 4.

De préférence, les électrobroches de tournage sont en outre capables de tourner à des vitesses très lentes et parfaitement synchronisées avec un autre mouvement des dispositifs de tenue et de positionnement d'outils.

Comme on le voit bien sur la figure 2, la disposition centrale des électrobroches de tournage 3 implique, pour des questions d'encombrement, d'utiliser de préférence des électrobroches de tournage ayant une forme générale qui va en se rétrécissant vers l'intérieur c'est-à-dire vers l'axe de rotation central de la tourelle 1. Par contre, en périphérie des électrobroches de tournage 3, on dispose d'une place beaucoup plus large pour contenir les outils dans le poste d'usinage 4.

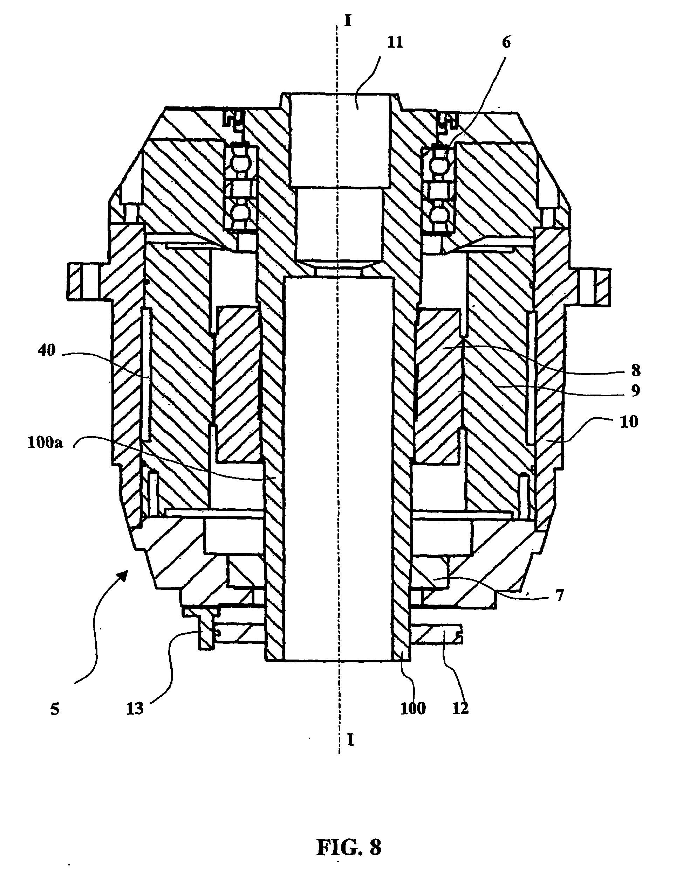

Si on se réfère à la figure 8, on distingue, dans l'électrobroche de tournage 5, une broche 100 rotative autour de l'axe I-I, portée par un premier roulement ou palier 6 et un second roulement ou palier 7. Le tronçon intermédiaire 100a de broche 100 entre les roulements ou paliers 6 et 7 est solidaire d'un rotor 8 de moteur qui est sollicité en rotation dans un stator 9 de moteur. L'ensemble est enfermé dans une carcasse 10. L'électrobroche 5 constitue ainsi une structure compacte qui minimise l'encombrement axial et radial et favorise la disposition d'un nombre maximal d'électrobroches sur la tourelle, tout en assurant une grande précision de tenue de pièce.

Dans la broche 100, on prévoit des logements tels que le logement 11 pour contenir le système de serrage de pièce, non représenté sur les figures.

Une roue codée 12 est calée sur la broche 100, et tourne face à un capteur optique 13 fournissant des signaux de position angulaire de broche qui sont envoyés à une commande du moteur (8, 9) pour piloter sa rotation et piloter sélectivement son blocage en rotation et son maintien en une position fixe déterminée et appropriée pour un usinage d'une pièce tenue fixe.

Pour atteindre une précision d'usinage satisfaisante , on contrôle la température de fonctionnement de l'électrobroche 5 support de pièce en assurant son refroidissement par passage d'un liquide de refroidissement dans un logement annulaire 40 en périphérie du stator 9.

Dans le mode de réalisation illustré sur les figures, les postes d'usinage sont sensiblement identiques. On pourra toutefois concevoir une structure de machine dans laquelle les postes d'usinage diffèrent les uns des autres.

On décrira maintenant plus en détail l'un des postes d'usinage, par exemple le poste d'usinage 14 sur les figures 1 à 3, qui se trouve face à une broche de tournage 15 dans la position angulaire représentée de la tourelle 1.

Le poste d'usinage 14 est limité latéralement par deux parois supports verticales 16 et 17, fixes sur le bâti 2. La première paroi support verticale 16 est orientée parallèlement à l'axe I de la broche de tournage 15, en étant décalée latéralement par rapport à l'axe I pour laisser la place des outils fixes du poste d'usinage 14. La seconde paroi support verticale 17 est elle-même parallèle à l'axe II de la broche adjacente 18 de la tourelle 1.

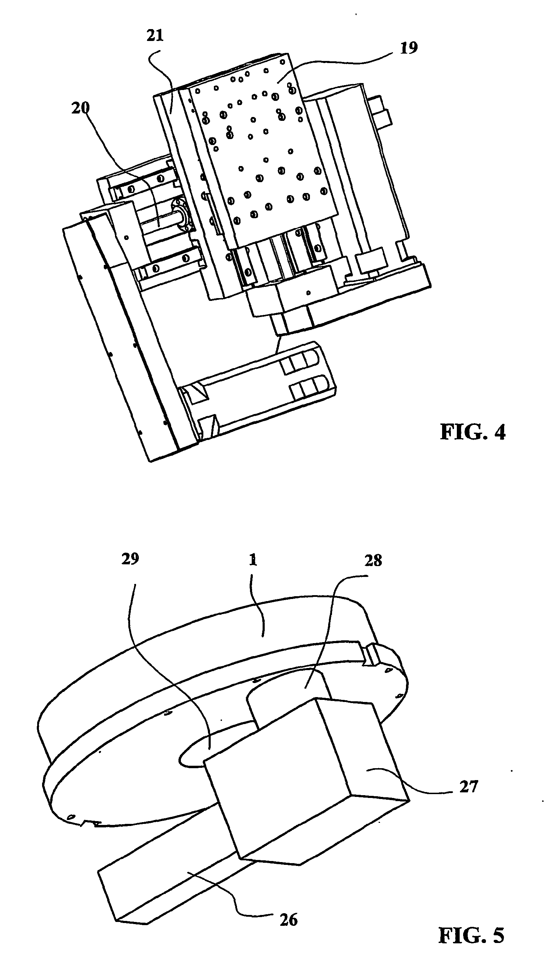

La première paroi support verticale 16 porte un plateau 19, mieux visible sur la figure 4, par l'intermédiaire d'une coulisse axiale 20 et d'une coulisse verticale 21, constituant une structure de chariots croisés. Le plateau 19 est adapté pour porter des outils ou des unités d'usinage du poste d'usinage 4. Ainsi, la coulisse axiale 20 permet les mouvements de déplacement des outils parallèlement à l'axe de la broche de tournage 15, tandis que la coulisse verticale 21 permet les mouvements perpendiculaires.

En réalité, dans le mode de réalisation illustré sur la figure 1, le poste d'usinage 14 comprend une première structure de chariots croisés portant le plateau 19, et une seconde structure de chariots croisés portant un plateau 22. La première structure de chariots croisés à plateau 19 permet de porter des outils dans l'espace inférieur d'usinage, à côté ou au-dessous de l'axe de la broche de tournage 15, tandis que la seconde structure de chariots croisés à plateau 22 permet de porter des outils dans la zone supérieure au-dessus ou à côté de l'axe de la broche de tournage 15.

De préférence, le bâti 2 est ajouré, comportant des passages d'évacuation inférieurs au droit de chaque poste d'usinage tels que les postes 4 ou 14, entre les parois supports verticales telles que les parois 16 et 17. Les déchets d'usinage peuvent ainsi être évacués par gravité vers le bas, sans gêner l'usinage ni le déplacement de la tourelle 1.

On comprend que les électrobroches de tournage telles que les électrobroches 3 et 15 de la tourelle 1 doivent être alimentées en énergie électrique pour le moteur, en énergie hydraulique pour le serrage de la pièce dans la broche, en eau pour le refroidissement, en huile pour la lubrification, et éventuellement en air pour certaines opérations nécessitant l'énergie pneumatique. L'apport de toutes ces énergies s'effectue, selon l'invention, par un faisceau de câbles et de tuyaux enroulé de façon appropriée.

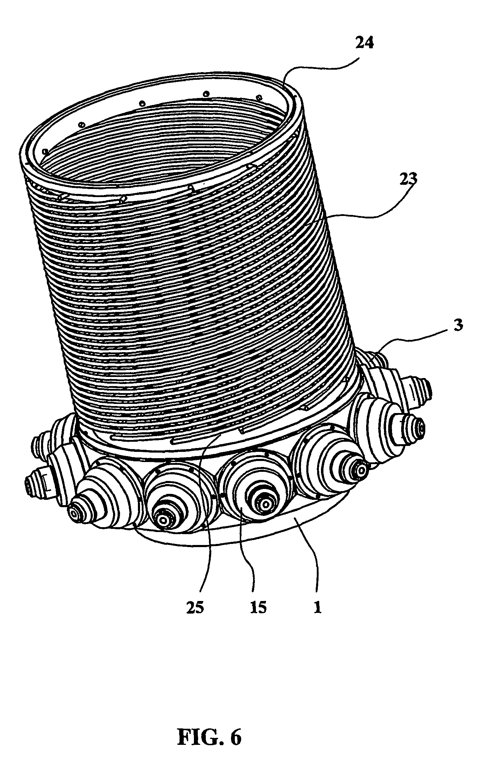

Sur la figure 6, on voit la tourelle 1 avec des broches de tournage telles que la broche 15 et la broche 3. Le faisceau hélicoïdal 23 de câbles et de tuyaux est enroulé en hélice entre une zone de branchement fixe 24 solidaire du bâti 2 et une zone de branchement rotative 25 montée sur la tourelle 1. De préférence, la zone de branchement fixe 24 est au-dessus de la tourelle 1. De bons résultats sont obtenus avec un faisceau hélicoïdal 23 de câbles et de tuyaux comportant au moins quatre spires pour chaque câble ou tuyau lorsque le faisceau est à l'état enroulé.

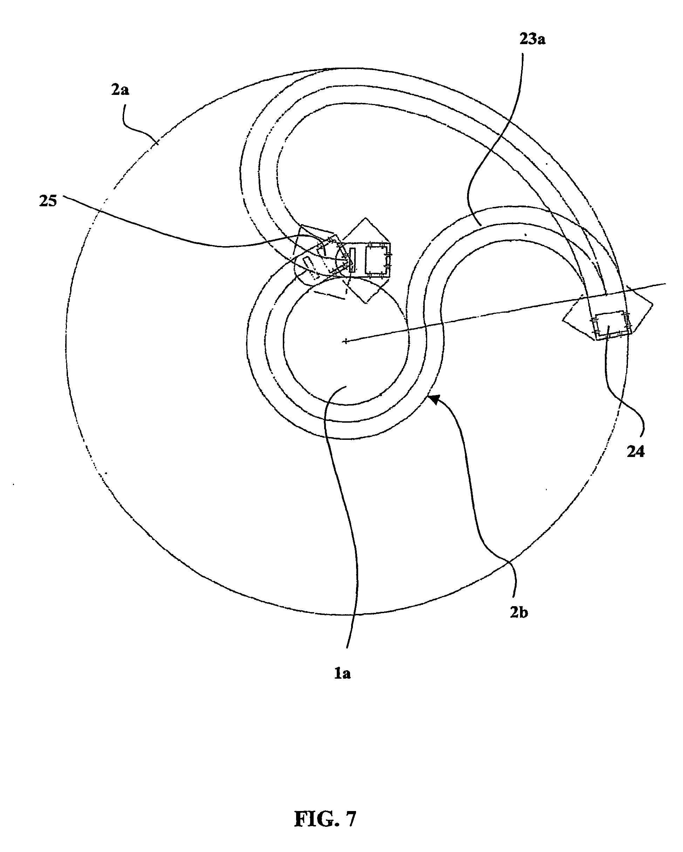

En alternative, sur la figure 7, un faisceau 23a en S de câbles et de tuyaux s'enroule et se déroule entre un moyeu central 1a rotatif, un guide périphérique annulaire fixe 2a et un guide intermédiaire annulaire fixe 2b. La figure illustre les deux positions angulaires limites du dispositif.

On comprend que la tourelle 1 doit pivoter pour amener les pièces d'un poste à l'autre, et elle doit être maintenue indexée en position fixe lorsque la pièce est face aux outils du poste d'usinage. On peut avantageusement maintenir la tourelle 1 en position fixe à l'aide d'une denture HIRTH. La figure 5 illustre schématiquement les moyens d'entraînement et d'indexage de la tourelle 1 : on distingue un moteur 26 qui entraîne la tourelle 1 par un réducteur 27, un pignon 28 et une roue 29. Des moyens de repérage de position angulaire de la tourelle 1 permettent de piloter le moteur 26, en définissant les positions dans lesquelles la tourelle 1 doit être indexée et maintenue fixe pour un usinage dans un poste d'usinage. Les broches d'usinage sont alors face aux postes d'usinage.

Le moteur 26 est piloté par des moyens de commande de tourelle, assurant une rotation de tourelle dans deux sens de rotation. Dans un premier sens, la rotation est intermittente, pour déplacer les pièces de poste en poste. Dans ce premier sens de rotation, les câbles et tuyaux hélicoïdaux se déroulent ou s'enroulent progressivement. Ensuite, on effectue une rotation inverse rapide, selon une révolution, pour enrouler ou dérouler à nouveau les faisceaux de câbles et de tuyaux hélicoïdaux.

Les moyens d'entraînement des broches sont adaptés pour entraîner sélectivement les broches à une vitesse de rotation de 0 à environ 6 000 tours/minute, par exemple, tout en assurant une possibilité d'indexage fixe et de fort couple de blocage contre les rotations pour tenir les pièces en position fixe au cours de certaines étapes d'usinage. Pour cela, le moteur de la broche est avantageusement un moteur synchrone, alimenté par une alimentation à commande numérique. La puissance développée par le moteur des broches peut avantageusement être de l'ordre de 10 kW à 3 500 tours/minute.

La disposition de deux structures de chariots croisés à chaque poste de travail permet de travailler les pièces par le dessus, par la face frontale, mais également par le dessous.

Le système de tenue de pièce sur la broche peut être un système traditionnel tel que ceux qui sont actuellement utilisés. En conséquence, il n'est pas nécessaire de le décrire car il est à la portée de l'homme du métier.

Les moyens de commande de rotation de la tourelle 1 peuvent avantageusement permettre un double indexage, à savoir un indexage simple pour faire pivoter la tourelle 1 d'un angle de rotation correspondant à l'angle nécessaire pour amener une pièce depuis un poste de travail jusqu'au poste de travail adjacent, et un indexage double correspondant à une rotation de tourelle permettant d'amener une pièce directement jusqu'au poste d'usinage qui suit le poste adjacent.

Les différents organes de la machine d'usinage selon l'invention sont avantageusement pilotés par une commande centralisée comprenant un microprocesseur à mémoire associée et programme enregistré. La commande centralisée reçoit les signaux de capteurs de position tels le capteur optique 13 associé à la roue codée 12, et commande le fonctionnement des moteurs pour contrôler les mouvements des pièces et des outils. De plus, la commande centralisée connaît à tout instant la position angulaire de la pièce en cours d'usinage, même après une opération de tournage.

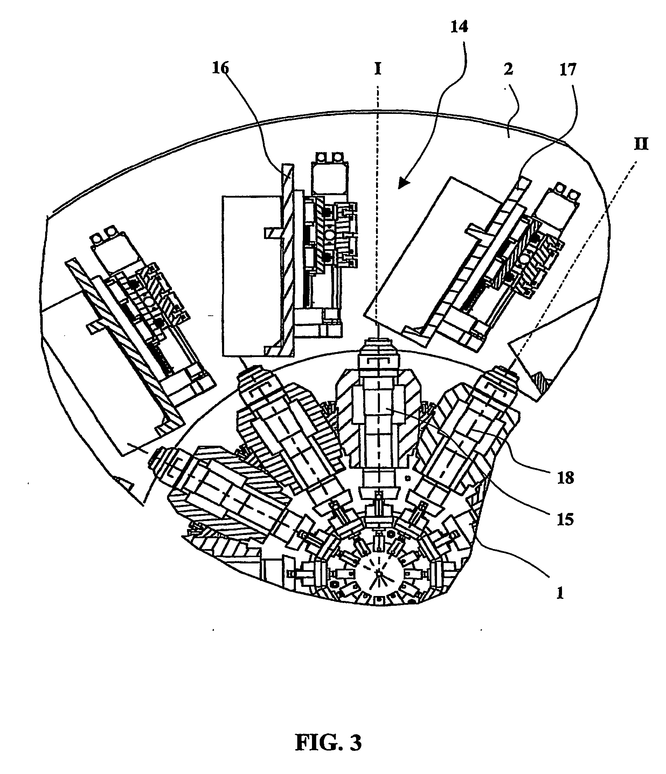

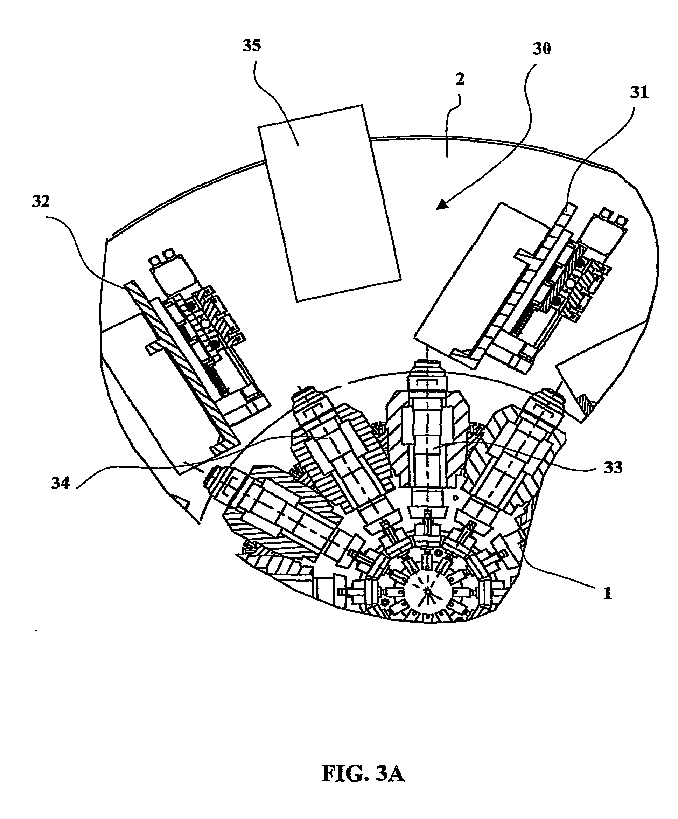

Le mode de réalisation illustré sur la figure 3A est adapté notamment au chargement automatique de la matière première à usiner, quelle que soit sa forme. Ainsi, le mode de réalisation est adapté au chargement automatique de pièces, de lopins ou de barres. Pour cela, l'un des postes autour de la tourelle 1, à savoir le poste 30, est dépourvu de dispositif de tenue et de positionnement d'outils. On peut ainsi adapter, au poste de chargement 30, un robot de chargement de pièce ou de lopin, un embarreur, ou tout autre dispositif approprié.

Dans ce cas, le poste de chargement 30 forme également un espace d'accès radial dans lequel un robot de retournement 35 peut assurer le retournement des pièces entre deux séquences d'usinage successives. Ainsi, le poste de chargement 30 est situé entre un premier poste d'usinage 31 adjacent et un second poste d'usinage 32 adjacent. A l'instant considéré, la broche 33 de la tourelle 1 se trouve face au poste de chargement 30, tandis que la broche 34 se trouve dans le poste d'usinage 32 adjacent. L'espace est libre, dans le poste de chargement 30, entre la zone frontale de la broche 33 et la zone frontale de la broche 34. Il en résulte que, dans le poste de chargement 30, le robot de retournement 35 peut ôter une pièce de la broche de tournage 33 présente au poste de chargement 30, le robot de retournement 35 peut retourner la pièce de 180°, et le robot de retournement 35 peut engager la pièce dans la broche de tournage 34 présente dans le poste adjacent 32.

En alternative ou en complément, grâce à la disposition des postes de travail permettant un accès radial à la zone d'usinage, un robot de retournement de pièce peut être adapté dans n'importe lequel des postes d'usinage, pour, après escamotage des outils portés par le dispositif porte-outil du poste d'usinage, ôter une pièce de la broche de tournage qui se trouve dans le poste d'usinage, retourner la pièce et l'engager à nouveau dans la même broche de tournage.

Dans les deux cas, il faut prévoir une commande indépendante des broches de tournage, pour assurer un serrage et un desserrage de pièce qui soit indépendant de la tenue des pièces par les autres broches de tournage de la tourelle 1, et qui puisse de préférence assurer une pression de serrage de la pièce qui soit modulable indépendamment des autres broches de tournage. Egalement, les broches de tournage sont commandées en rotation indépendamment les unes des autres, afin de s'adapter de façon souple aux différents usinages réalisés sur les différents postes.

De la sorte, le dispositif du mode de réalisation de la figure 3A permet un usinage des pièces sur toutes leurs faces.

Le dispositif de commande de la machine peut notamment être programmé pour réaliser l'usinage en deux séquences successives et un retournement de pièces : lors d'une première séquence d'usinage, l'ébauche ou le lopin engagé sur une broche de tournage est présenté successivement à plusieurs postes d'usinage réalisant les usinages d'une première partie de sa surface, par exemple en déplaçant successivement la pièce tous les deux postes de travail ; ensuite, on retourne la pièce pour l'engager soit sur la même broche de tournage soit sur la broche adjacente ; et on exécute une seconde séquence d'usinage en présentant successivement la pièce aux mêmes postes, si la pièce est symétrique, ou aux autres postes d'usinage si les deux côtés de la pièce diffèrent.

La présente invention n'est pas limitée aux modes de réalisation qui ont été explicitement décrits, mais elle en inclut les diverses variantes et généralisations contenues dans le domaine des revendications ci-après.

## Revendications

1. Machine multiposte d'usinage de pièces à transfert rotatif, comprenant :
- une tourelle (1) rotative indexable équipée de plusieurs dispositifs de tenue de pièces répartis en périphérie de la tourelle (1),
- une pluralité de dispositifs de tenue et de positionnement d'outils, répartis en une pluralité de postes d'usinage autour de la tourelle (1) et adaptés pour usiner les pièces portées par les dispositifs de tenue de pièces,
- les dispositifs de tenue de pièces comprenant des broches de tournage (3, 15), placées en position fixe sur la tourelle (1), dont l'axe (I, II) est orienté vers la périphérie de la tourelle (1) et qui sont capables d'entraîner en rotation rapide la pièce pour une opération de tournage par des outils de tournage prévus dans l'un au moins des postes d'usinage (4, 14),
- les broches de tournage (3, 15) étant capables de s'indexer en toutes positions angulaires pour permettre d'autres usinages de la pièce par d'autres outils adaptés prévus dans l'un au moins des postes d'usinage (4, 14),
**caractérisée en ce que :**
- les dispositifs de tenue de pièces sont des électrobroches (3, 5, 15), ayant une structure compacte qui minimise l'encombrement axial et radial, constituées d'une broche (100) dont un tronçon (100a) supporté par deux roulements ou paliers (6, 7) porte directement le rotor (8) du moteur d'entraînement de broche,
- les électrobroches (3, 5, 15) sont disposées sur la tourelle (1) côte à côte au contact ou à proximité immédiate les unes à la suite des autres.

2. Machine d'usinage selon la revendication 1, **caractérisée en ce que** certains au moins des postes d'usinage (4, 14) comprennent une paroi support verticale (16) orientée parallèlement à l'axe (II) d'une électrobroche de tournage (15) et portant un plateau (19) porte-unité d'usinage par l'intermédiaire d'une coulisse axiale (20) et d'une coulisse verticale (21) constituant une structure de chariots croisés.

3. Machine d'usinage selon la revendication 2, **caractérisée en ce qu'**elle comprend, dans certains au moins des postes d'usinage (14), deux structures de chariots croisés, une première structure avec un premier plateau (19) pour couvrir l'espace inférieur et frontal d'usinage, une seconde structure avec un second plateau (22) pour couvrir l'espace supérieur d'usinage.

4. Machine d'usinage selon l'une des revendications 2 ou 3, **caractérisée en ce qu'**elle comprend des passages d'évacuation inférieurs entre les parois supports verticales (16, 17) successives.

5. Machine d'usinage selon l'une quelconque des revendications 1 à 4, **caractérisée en ce que** les électrobroches de tournage (3, 15) ont une forme générale rétrécie vers l'intérieur de la tourelle (1).

6. Machine d'usinage selon l'une quelconque des revendications 1 à 5, **caractérisée en ce que** l'alimentation des électrobroches de tournage (3, 15) en énergie est assurée par un faisceau de câbles et de tuyaux (23) enroulé autour de l'axe de rotation de la tourelle (1) entre une zone de branchement fixe (24) sur le bâti (2) et une zone de branchement rotative (25) sur la tourelle (1).

7. Machine d'usinage selon la revendication 6, **caractérisée en ce que** la zone de branchement fixe (24) est située au-dessus de la tourelle (1).

8. Machine d'usinage selon l'une quelconque des revendications 1 à 7, **caractérisée en ce qu'**elle comprend des moyens de commande de rotation de tourelle assurant une rotation alternative de la tourelle (1), avec une séquence d'usinage à rotations partielles depuis une position d'origine dans un premier sens pour les transferts successifs des pièces de poste en poste entre les étapes d'usinage successives, et avec une séquence de retour à rotation inverse rapide jusqu'en position d'origine de la tourelle (1).

9. Machine d'usinage selon l'une des revendications 6 ou 7, **caractérisée en ce que**, en position d'enroulement maximum, le faisceau de câbles et de tuyaux (23) forme une hélice ou un S.

10. Machine d'usinage selon l'une quelconque des revendications 1 à 9, **caractérisée en ce que** les moyens de commande de rotation de la tourelle (1) permettent un double indexage, à savoir un indexage simple pour faire pivoter la tourelle (1) d'un angle de rotation correspondant à l'angle nécessaire pour amener une pièce depuis un poste de travail jusqu'au poste de travail adjacent, et un indexage double correspondant à une rotation de tourelle permettant d'amener une pièce directement jusqu'au poste d'usinage qui suit le poste adjacent.

11. Machine d'usinage selon l'une quelconque des revendications 1 à 10, **caractérisée en ce que** l'un des postes (30) autour de la tourelle (1) est dépourvu de dispositif de tenue et de positionnement d'outils et constitue un poste de chargement permettant le chargement automatique de pièces, de lopins ou de barres.

12. Machine d'usinage selon la revendication 11, **caractérisée en ce que** le poste de chargement (30) forme un espace d'accès radial dans lequel un robot de retournement (35) peut ôter une pièce de la broche de tournage (33) présente au poste de chargement (30), retourner la pièce de 180° et l'engager dans une broche de tournage (34) présente dans le poste adjacent.

13. Machine d'usinage selon l'une quelconque des revendications 1 à 12, **caractérisée en ce qu'**elle comprend, à au moins l'un des postes d'usinage, un robot de retournement de pièce qui peut ôter une pièce de la broche de tournage présente, retourner la pièce et l'engager dans ladite broche de tournage présente.

## Claims

1. Rotating transfer multi-station machine for machining pieces, including :
- an indexable rotary turret (1) equipped with a plurality of work-holding devices distributed around the periphery of the turret (1),
- a plurality of devices for holding and positioning tools, distributed between a plurality of machining stations around the turret (1) and adapted to machine the workpieces carried by the work-holding devices,
- the work-holding devices include turning spindles (3, 15), in fixed positions on the turret (1), each with its axis (I, II) oriented toward the periphery of the turret (1), and which are capable of driving a workpiece in fast rotation for an operation of turning by turning tools in at least one of the machining stations (4, 14),
- the turning spindles (3, 15) are capable of being indexed in all angular positions to allow other machining of the workpiece by suitable other tools in at least one of the machining stations (4, 14),
**characterized in that** :
- the work-holding devices are electrospindles (3, 5, 15), having a compact structure that minimizes their overall size in the axial and radial directions, consisting of a spindle (100) having a section (100a) supported by two rolling bearings or bearings (6, 7) and carrying directly the rotor (8) of the spindle drive motor,
- the electrospindles (3, 5, 15) are disposed on the turret (1) side by side in contact with or in the immediate vicinity of each other and one after the other.

2. Machine for machining according to claim 1, **characterized in that** at least some of the machining stations (4, 14) have a vertical support wall (16) oriented parallel to the axis (II) of a turning electrospindle (15) and carrying a machining unit carrier plate (19) through the intermediary of an axial slide (20) and a vertical slide (21) constituting a crossed carriage structure.

3. Machine for machining according to claim 2, **characterized in that** it includes, in at least certain machining stations (14), two crossed carriage structures, namely a first structure with a first plate (19) to cover a lower and frontal machining space and a second structure with a second plate (22) to cover an upper machining space.

4. Machine for machining according to either claim 2 or claim 3, **characterized in that** it includes lower evacuation passages between the successive vertical support walls (16, 17).

5. Machine for machining according to any one of claims 1 to 4, **characterized in that** the turning electrospindles (3, 15) have a general shape that reduces in size toward the interior of the turret (1).

6. Machine for machining according to any one of claims 1 to 5, **characterized in that** the turning electrospindles (3, 15) are supplied with energy by a bundle (23) of cables and hoses wound around the rotation axis of the turret (1) between a fixed connection region (24) on the frame (2) and a rotary connection region (25) on the turret (1).

7. Machine for machining according to claim 6, **characterized in that** the fixed connection region (24) is above the turret (1).

8. Machine for machining according to any one of claims 1 to 7, **characterized in that** it includes turret rotation drive means providing alternating rotation of the turret (1), with a machining sequence with partial rotations in a first direction from an origin position for successively transferring workpieces from station to station between successive machining steps, and a fast reverse rotation return sequence to the origin position of the turret (1).

9. Machine for machining according to either claim 6 or claim 7, **characterized in that**, in fully wound position, the bundle (23) of cables and hoses forms a helix or an S-shape.

10. Machine for machining according to any one of claims 1 to 9, **characterized in that** the rotation drive means of the turret (1) provide double indexing, that is to say a single indexing to pivot the turret (1) by a rotation angle corresponding to the angle necessary to feed a workpiece from one workstation to the next adjacent workstation, and a double indexing corresponding to rotation of the turret to feed a workpiece directly to the machining station after the adjacent station.

11. Machine for machining according to any one of claims 1 to 10, **characterized in that** one of the stations (30) around the turret (1) has no work-holding and positioning device and constitutes a loading station for the automatic loading of workpieces, billets, or bar stock.

12. Machine for machining according to claim 11, **characterized in that** the loading station (30) forms a radial access space in which an overturning robot (35) can remove the workpiece from the turning spindle (33) present at the loading station (30), turn the workpiece through 180°, and engage it in a turning spindle (34) present in the adjacent station.

13. Machine for machining according to any one of claims 1 to 12, **characterized in that** it includes, at one machining station at least, a workpiece overturning robot that can remove a workpiece from the turning spindle that is present in the station, turn the workpiece over, and engage it in said turning spindle that is present in the station.

## Patentansprüche

1. Werkzeugmaschine mit mehreren Stationen und Drehweiterschaltung zur Bearbeitung von Werkstücken, umfassend:
- einen indexierbaren, drehbaren Rundschalttisch (1) mit mehreren Werkstück-Spanneinheiten, die auf dem Umfang des Rundschalttisches (1) verteilt sind,
- mehrere Spann- und Positioniervorrichtungen für Werkzeuge, die zur Bearbeitung der von den Spanneinheiten getragenen Werkstücke auf mehrere Bearbeitungsstationen am Umfang des Rundschalttisches (1) verteilt sind,
- wobei die Werkstück-Spanneinheiten Drehspindeln (3, 15) aufweisen, die ortsfest auf dem Rundschalttisch (1) angeordnet sind, deren Achse (I, II) zum Außenumfang des Rundschalttisches (1) ausgerichtet ist und die so ausgebildet sind, daß sie das Werkstück für eine Drehbearbeitung durch die in wenigstens einer der Bearbeitungsstationen (4, 14) vorgesehenen Drehwerkzeuge in rasche Drehung versetzen,
- wobei ferner die Drehspindeln (3, 15) so ausgebildet sind, daß sie sich in allen Winkelstellungen verriegeln können, um andere Bearbeitungen des Werkstückes durch weitere geeignete Werkzeuge zu ermöglichen, die in wenigstens einer der Bearbeitungsstationen (4, 14) angeordnet sind,
**dadurch gekennzeichnet, daß**:
- die Werkstück-Spanneinheiten elektrisch angetriebenen Spindeln (3, 5, 15) sind, die aus einer Spindel (100) bestehen, von der ein Abschnitt (100a), der durch zwei Wälzlager oder Gleitlager (6, 7) gelagert ist, unmittelbar den Rotor (8) des Spindel-Antriebsmotors trägt,
- die elektrisch angetriebenen Spindeln (3, 5, 15) auf dem Rundschalttisch (1) Seite an Seite in Kontakt oder unmittelbar benachbart zueinander angeordnet sind.

2. Werkzeugmaschine nach Anspruch 1, **dadurch gekennzeichnet, daß** wenigstens einige der Bearbeitungsstationen (4, 14) eine vertikale Stützwand (16) aufweisen, die sich parallel zur Achse (II) einer elektrisch angetriebenen Spindel (15) erstreckt und über eine Axialführung (20) und eine Vertikalführung (21), die zusammen eine Kreuzschlitten-Struktur bilden, einen Tisch (19) trägt, der als Träger für eine Bearbeitungseinheit dient.

3. Werkzeugmaschine nach Anspruch 2, **dadurch gekennzeichnet, daß** diese in wenigstens einigen der Bearbeitungsstationen (14) zwei Kreuzschlitten-Strukturen hat, nämlich eine erste Kreuzschlitten-Struktur mit einem ersten Tisch (19) zur Abdeckung des unteren und frontalen Bearbeitungsraumes und eine zweite Kreuzschlitten-Struktur mit einem zweiten Tisch (22) zur Abdeckung des oberen Bearbeitungsraumes.

4. Werkzeugmaschine nach einem der Ansprüche 2 oder 3, **dadurch gekennzeichnet, daß** diese zwischen den aufeinander folgenden vertikalen Stützwänden (16, 17) untere Ablauföffnungen hat.

5. Werkzeugmaschine nach einem der Ansprüche 1 bis 4, **dadurch gekennzeichnet, daß** die elektrisch angetriebenen Spindeln (3, 15) eine sich zum Inneren des Rundschalttisches (1) allgemein verjüngende Form haben.

6. Werkzeugmaschine nach einem der Ansprüche 1 bis 5, **dadurch gekennzeichnet, daß** die Versorgung der elektrisch angetriebenen Spindeln (3, 15) mit Energie über ein Bündel (23) aus Kabeln und Schläuchen erfolgt, das um die Drehachse des Rundschalttisches (1) zwischen einer festen Abzweigzone (24) auf dem Untergestell (2) und einer drehbaren Abzweigzone (25) auf dem Rundschalttisch (1) gewickelt ist.

7. Werkzeugmaschine nach Anspruch 6, **dadurch gekennzeichnet, daß** die feste Abzweigzone (24) oberhalb des Rundschalttisches (1) liegt.

8. Werkzeugmaschine nach einem der Ansprüche 1 bis 7, **dadurch gekennzeichnet, daß** diese Mittel für den Drehantrieb des Rundschalttisches aufweist, welche eine wechselweise Rotation des Rundschalttisches (1) mit einer Bearbeitungsfolge bei Teildrehungen gewährleistet, ausgehend von einer Ausgangsstellung in einem ersten Drehsinn für die Weiterschaltungen der Werkstücke von einer Station zur nächsten Station zwischen den aufeinander folgenden Bearbeitungsschritten, und mit einer Rückkehrsequenz in der Gegendrehrichtung bei rascher Rotation bis zurück zur Ausgangsstellung des Rundschalttisches (1).

9. Werkzeugmaschine nach einem der Ansprüche 6 oder 7, **dadurch gekennzeichnet, daß** das Bündel (23) aus Kabeln und Schläuchen in der maximal aufgewickelten Stellung schraubenförmig oder S-förmig ist.

10. Werkzeugmaschine nach einem der Ansprüche 1 bis 9, **dadurch gekennzeichnet, daß** die Mittel für den Drehantrieb des Rundschalttisches (1) eine doppelte Indexierung erlauben, nämlich eine einfache Indexierung zum Schwenken des Rundschalttisches (1) um einen Drehwinkel, der dem notwendigen Winkel entspricht, um ein Werkstück von einer Bearbeitungsstation zur benachbarten Bearbeitungsstation zu bringen, und eine doppelte Indexierung entsprechend einer Drehung des Rundschalttisches, um ein Werkstück direkt in eine Bearbeitungsstation zu bringen, welche auf die benachbarte Station folgt.

11. Werkzeugmaschine nach einem der Ansprüche 1 bis 10, **dadurch gekennzeichnet, daß** eine Station (30) am Umfang des Rundschalttisches (1) ohne Spann- und Positioniervorrichtungen für Werkzeuge ausgebildet ist und eine Beschickungsstation bildet, die eine automatische Beschickung mit Werkstücken, Rohlingen oder Stangen erlaubt.

12. Werkzeugmaschine nach Anspruch 11, **dadurch gekennzeichnet, daß** die Beschickungsstation (30) einen radialen Zugriffsraum bildet, in dem ein Umkehrroboter (35) ein Werkstück aus der Drehspindel (33), die sich in der Beschickungsstation (30) befindet, entnehmen, dieses um 180° drehen und in eine Drehspindel (34) einsetzen kann, die sich in der benachbarten Station befindet.

13. Werkzeugmaschine nach einem der Ansprüche 1 bis 12, **dadurch gekennzeichnet, daß** diese in wenigstens einer der Bearbeitungsstationen einen Werkstück-Umkehrroboter aufweist, der ein Werkstück aus der darin befindlichen Drehspindel entnehmen, dieses umdrehen und in dieselbe Drehspindel wieder einsetzten kann.
